# EUROPÄISCHE PATENTANMELDUNG

(11) **EP 1 413 365 A2**
(43) Veröffentlichungstag der Anmeldung: **28.04.2004**
(21) Anmeldenummer: 03016674.8
(22) Anmeldetag: 01.08.2003
(51) Int. Cl.: B05D 5/12, B05D 7/04, C08J 7/04

(54) **Folie mit antistatischer Beschichtung**

(30) Priorität: 07.08.2002 DE 10236153
(71) Anmelder: Klöckner Pentaplast GmbH & Co. KG, 56412 Heiligenroth (DE)
(72) Erfinder: Kohlert, Christian, 56414 Oberahr (DE); Koutscherenko, Olga, 56237 Breitenau (DE); Behrendt, Sven, 76646 Bruchsal (DE); Berlekamp, Martin, 56410 Montabaur (DE)
(74) Vertreter: Zounek, Nikolai, Dipl.-Ing.

(57) **Zusammenfassung**

Die antistatische Beschichtung von Folien, insbesondere von Folienbahnen, erfolgt mit einer antistatischen Formulierungunter anderem auf der Basis der Sol-Gel-Technologie. Hierzu enthält eine nach dieser Technologie hergestellte Sol-Dispersion bzw. Auftragslösung ein Fluorschichtsilikat, ein elektrisch leitfähiges Polymer, ein Gemisch aus Fluorschichtsilikat und elektrisch leitfähigem Polymer oder aus einem Nanosol hervorgegangenes Siliciumoxid oder ein Metalloxid. Nach dem Auftragen der antistatischen Formulierung auf ein Substrat und Trocknen mittels IR-Strahlung und/oder Heißluft bilden die in der Formulierung dispergierten Bestandteile eine glatte geschlossene Schicht von 0,01 bis 4µm Dicke mit einem Oberflächenwiderstand von 10⁴ bis 10⁸ Ω/Fläche.

Eine Vorrichtung zum Beschichten der Oberfläche einer Folienbahn 5 mit der antistatischen Formulierung 8 umfasst eine Extrusionsdüse 1 mit einem dochtförmigen Streifen 4, der aus einem Schlitz 3 herausragt und die Folienbahn 5 kontaktiert. Die Extrusionsdüse ist über eine Dosierpumpe 2 mit einem Vorratsbehälter 7 für die antistatische Formulierung verbunden, die mit Druck dosiert aufgetragen wird. Die beschichtete Folienbahn 5 durchläuft eine Trocknungszone, in der das Lösungsmittel der antistatischen Formulierung verdunstet.

## Beschreibung

Die Erfindung betrifft eine Folie mit antistatischer Beschichtung, die mindestens eine Schicht umfasst, und ein Verfahren zum Aufbringen einer antistatischen Formulierung auf eine Folie, insbesondere auf eine Folienbahn, sowie eine Vorrichtung zum Benetzen und Beschichten einer Folie, insbesondere einer Folienbahn.

Es ist allgemein bekannt, die Oberflächen von extrudierten, kalandrierten und/oder gereckten Folien durch antistatische Beschichtungen zu veredeln, um ihr antistatisches Verhalten in der Weise zu verbessern, dass ihre elektrostatische Aufladung reduziert wird, wodurch solche Folien zum Verpacken von elektronischen Bauteilen besonders geeignet sind.

Aus ökonomischen und technologischen Gründen ist das Aufbringen von antistatischen Beschichtungen auf Polymerfolien mittels der Sol-Gel-Technologie eine besonders günstige Variante zum Veredeln von Folien. Hierzu bieten sich neben konventionellen organischen Bindemitteln anorganische Oxidschichten an, die bei Raumtemperatur und Normaldruck durch Sol-Gel-Technologie erzeugtwerden. Die Vorteile derartiger Sol-Gel-Beschichtungen gegenüber organischen Polymerschichten bestehen u. a. darin, dass dieseBeschichtungen mechanisch stabil, hochtransparentund biologisch inert sind. Mit ihrer hohen Flexibilitätund ihrer Variantionsbreite ermöglicht die Sol-Gel-Technologie einen Ansatz, sehr dünne antistatische Beschichtungen auf Polymerflächen aufzubringen.

Aus der DE-A 195 31 038 sind Folien mit einer antistatischen Beschichtung bekannt, die mindestens eine Schicht von 20 bis 80 Gew.-% eines Metallalkoxidhydrolysat und 80 bis 20 Gew.-% eines kationischen Polymerisats enthält. Als Metallalkoxide werden hydrolysierbare Verbindungen auf der Basis von Silicium, Aluminium oder Titan verwendet. Die Schichten zeichnen sich durch hohe Transparenz und gute Leitfähigkeit aus, die auch nach Kontaktierung mit fotografischen Entwicklungsbädern erhalten bleibt. In Folge der guten mechanischen Eigenschaften bedürfen sie keiner zusätzlichen Schutzschicht.

In der DE-A 197 56 906 ist ein Beschichtungsmittel beschrieben, insbesondere für textile oder polymere Materialien, das ein Schicht bildendes Organosol, ein Aluminium- oder Zirkoniumhalogenid in einem wässrig-organischen Lösungsmittel sowie eine vernetzende Verbindung mit mindestens zwei Hydroxylgruppen enthält. Das Beschichtungsmittel kann u. a. zur Modifizierung des Absorptions- und Reflexionsverhaltens sowie zur Verbesserung der physikalisch-mechanischen Eigenschaften textiler oder polymerer Materialien eingesetztwerden. Das Organosol entsteht durch Co-Hydrolyse von Tetraalkoxysilanen, Trialkoxysilanenund/oder Dialkoxysilanen in einem organischen Lösungsmittel.

In der DE-200 11 006U1 ist eine Vorrichtung zum Beschichten und Benetzen von Warenbahnen beschrieben, mit einer Antragswalze und einem Dosiersystem mit einem streifenförmig ausgebildeten Docht aus porösem Material. Die Bahn umschlingt die Antragswalze teilweise und ein Docht in einem Schlitz eines sonst allseitig geschlossenen Extrusionsgießers ist so angeordnet, dass er mit seinem freien Ende an der Antragswalze anliegt. Der Extrusionsgießer ist über eine Rohrleitung und über eine Dosierpumpe mit einem Vorratsbehälter verbunden. Eine derartige Vorrichtung ermöglicht eine dünne Beschichtung von Warenbahnen mit Nanosol-Lösungen.

Aufgabe der Erfindung ist es Polymeroberflächen antistatisch auszurüsten, wobei die antistatische Beschichtung ein maßgeschneidertes funktionelles Beschichtungssystem sein soll, das kratzfest istund einen niedrigeren elektrischen Oberflächenwiderstand aufweist. Im Rahmen dieser Aufgabe handelt es sich bei den Polymeroberflächen insbesondere um Oberflächen von Folien, die beispielsweise der Witterung, insbesondere Feuchtigkeit, oder aber vor der Weiterverarbeitung auch einem Waschvorgang ausgesetzt sein können und daher ihre physikalisch-mechanischen Eigenschaften auchnach einmaligen oder mehrmaligem Kontakt mit Feuchtigkeit beibehalten sollen, darüber hinaus tiefziehbar sein sollen und eine Transparenz besitzen, die eine gute Barcodelesbarkeit durch die Folien ergibt.

Diese Aufgabe wird durch eine Folie mit antistatischer Beschichtung gelöst, die mindestens eine Schicht umfasst, die ein synthetisches anorganisches Schichtsilikat, ein elektrisch leitfähiges Polymer, ein Gemisch aus einem anorganischen Schichtsilikat und elektrisch leitfähigem Polymer oder aus Nanosol hervorgegangenem reinem oder modifiziertem Siliciumoxid oder Metalloxid auf der Basis von Zinn, Zink, Strontium, Wolfram, Eisen Titan, Aluminium, Zirkonium enthält, mit einer Trockenschichtdicke von 0,01 µm bis 4 µm und einem Oberflächenwiderstand von 10⁴ bis 10⁸ Ω/Fläche der Schicht.

In Ausgestaltung der Erfindung enthält die Schicht Bindemittel, Haftvermittler, Vernetzungsmittel und/oder oberflächenaktive Substanzen. Dabei beträgt der Gewichtsanteil der Bindemittel in der Schicht 10 bis 35 Gew.-%. In weiterer Ausgestaltung der Erfindung ist die antistatische Beschichtung auswaschfest und liegt nach dem Waschen der Oberflächenwiderstand der Schicht im Bereich von 10⁴ bis 10⁹ Ω/Fläche.

Zweckmäßigerweise beträgt der Oberflächenwiderstand der Folie nach dem Tiefziehen 10⁴ bis 10¹⁰ Ω/Fläche.

Die weitere Ausgestaltung der Erfindung ergibt sich aus den Merkmalen der Patentansprüche 6 bis 15.

Im Rahmen der vorliegenden Aufgabe soll ein Verfahren zum Aufbringen einer antistatischen Formulierung auf eine Folie, insbesondere eine Folienbahn, sowie eine Vorrichtung geschaffen werden, die antistatisches Beschichten von Folien, insbesondere von Oberflächen von Folienbahnen, mit sehr dünnen Schichten ermöglichen.

Das erfindungsgemäße Verfahren zum Aufbringen einer antistatischen Formulierung auf eine Folie, insbesondere eine Folienbahn, zeichnet sich dadurch aus, dass durch homogenes Dispergieren eines Schichtsilikats, eines elektrisch leitfähigen Polymers, eines Gemisches aus Schichtsilikat und elektrisch leitfähigem Polymer oder eines aus einem Nanosol hervorgegangenen Silizium- oder Metalloxids in reinem Wasser oder ein organisches Lösungsmittel enthaltendem Wasser, und Zusatz von mindestens einem Bindemittel und mindestens einem Haftvermittler eine Auftragslösung erhalten wird, die als Dispersion oder Nanosol durch Streichen, Sprühen, Tauchen, Walzen, Beschichten auf die Folienoberfläche und Aufkonzentrieren der dispergierten Bestandteile durch Verdunsten der Auftragslösung mittels IR-Strahlung und/oder Heißluft aufgebracht wird.

In Ausgestaltung des Verfahrens wird das Beschichten der Folienbahn mit Nanosolen durch einen porösen Materialstreifen einer Extrusionsdüse hindurch mittels Überdruck ausgeführt. Dabei werden der Auftragslösung, dieein Fluorschichtsilikat enthält, Vernetzungsmittel und/oder oberflächenaktive Substanzen zugesetzt. Zweckmäßigerweise wird die Auftragslösung in einer Nassschichtdicke von 0,5 bis 8 µm aufgetragen und beträgt die Trockenschichtdicke der Beschichtung 0,01 bis 4 µm.

Die weitere Ausgestaltung des Verfahrens ergibt sich aus den Merkmalen der Patentansprüche 20 bis 23.

Eine Vorrichtung zum Benetzen und Beschichten einer Folie, insbesondere einer Folienbahn, mit einer antistatischen Formulierung, mit einer Extrusionsdüse, die einen porösen Materialstreifen umfasst, durch dessen Kapillaren die antistatische Formulierung unter Überdruck hindurchtritt und auf die Folienbahn aufgetragen wird, zeichnet sich dadurch aus, dass die Extrusionsdüse einen Schlitz aufweist, in dem der Materialstreifen angeordnet ist, der aus dem Schlitz herausragt und an der Folienbahn anliegt, die über einen oberen Bereich einer Walze geführt ist, dass die Extrusionsdüse über eine Dosierpumpe mit einem Vorratsbehälter für die antistatische Formulierung verbunden ist und dass in Laufrichtung der Folienbahn nach der Walze eine Trocknungszone vorhanden ist, in der Heißluft die mit der antistatischen Formulierung nassbeschichtete Folienbahn trocknet.

Zweckmäßigerweise ist in der Trocknungszone eine IR-Strahlungsquelle vorhanden.

In Weiterbildung der Vorrichtung ist der Materialstreifen dochtförmig und sein Material besteht aus Filz, poröserKeramik, Kapillaren aufweisendenmetallischenoderglasförmigenMaterialien.

Die oberflächenaktiven Substanzen sind u. a. Mittel zur Verringerung der Oberflächenspannung, die während der Herstellung von Nanosolen nach oder vor der Hydrolyse der Silicium- oder Metallalkoxide zugesetzt werden.

Die Erfindung wird im Folgenden an Hand von Ausführungsbeispielen näher erläutert. Es zeigen:
Fig. 1 eine schematische Ansicht einer Vorrichtung zum Aufbringen einer antistatischen Beschichtung auf eine Folienbahn,
Fig. 2 ein Detail einer Extrusionsdüse der Vorrichtung nach Fig. 1 und
Fig. 3 eine Vorrichtung zur Tauchwalzenbeschichtung einer Folienbahn.

Polymere haben in der Regel hohe elektrische Oberflächenwiderstände, was sie für die Anwendung als Isolatoren in der Elektrotechnik und Elektronik geeignet macht. Heutzutage finden Polymere jedoch immer häufiger Anwendung zum Vermeiden elektrostatischer Aufladungen von Kunststoffteilen und zum Erzielen einer Abschirmwirkung von Kunststoffteilen gegenüber elektromagnetischen Wellen. Die Abschirmung von hochempfindlichen elektronischen Bauelementen mittels entsprechenderpräparierterPolymeren, wie beispielsweise Folien, gewinnt an Bedeutung. Hierzu ist es erforderlich, den elektrischen Oberflächenwiderstand von Polymeren zu reduzieren.

Der klassische Weg Polymere elektrisch auszurüsten besteht darin, in eine Polymermatrix ein leitfähiges Additiv einzumischen. Intrinsisch leitfähige Polymere wie Polypyrrol, Polyanilin, Polyacetylen u. a. lassen sich durch einen Oxidationsschritt leitfähig machen.

Für die Polymermatrix von Polyolefinen wie Polypropylen, Polyethylen und für PVC bestand die Auswahl, sie elektrisch leitfähig zu machen, bis vor Kurzem darin, leitfähige Füllstoffe in die Polymermatrix einzubringen. Eine Alternative hierzu besteht darin, die Oberflächen von solchen Polymeren antistatisch zu beschichten, indem intrinsisch leitfähige Polymere auf die mittels Corona- oder Plasmabehandlung angeregte Polymeroberfläche aufgetragen werden. Das Auftragen von intrinsisch leitfähigen Polymeren ist technisch aufwändig und sehr kostenintensiv, sodass das Beschichten von Folien mit entsprechenden antistatischen Beschichtungen der technisch einfachere und kostengünstigere Weg ist.

Die synthetischen intrinsischen Leiter können entweder als wässrige Dispersionen oder als auf Lösemittel basierende Dispersionen hergestellt werden.

Im Folgenden werden verschiedene unterschiedliche Beschichtungsmaterialien beschrieben.

### 1. Laponite® JS

Laponite® JS ist ein kolloiddisperses synthetisches Schichtsilikat. Bei Laponite® JS handelt es sich um eine Handelsmarke der Laporte Industries Ltd., London. Laponite® JS wird als ein synthetisches, schichtiges, wasserhaltiges, ein anorganisches Polyphosphat-Peptisiermittel enthaltendes Natriumlithiummagnesiumfluorsilikat beschrieben. Die Silikate sind freifließende weiße Pulver und hydratisieren gut in Wasser, wodurch nahezu klare und farblose kolloidale Dispersionen mit niedriger Viskosität, die als "Technosole" bezeichnetwerden, erhaltenwerden. Die Feuchtwasserlösungen sind bevorzugt wässrige Lösungen mit wasserlöslichen organischen Lösungsmitteln. Beispiele für solche wasserlöslichen organischen Lösungsmittel sind Alkohole, mehrwertige Alkohole, Ether, Polyglykole und Ester. Die Menge an organischen Lösungsmitteln wird möglichst klein gehalten und bezweckt die Erniedrigung der Oberflächenspannung.

Eine Rezeptur beinhaltet beispielsweise 65 bis 70 Gew.-% Laponite® JS-Dispersion, davon 18 bis 20 Gew.-% Feststoffanteile Laponite® JS, 4 bis 6 Gew.-% Aerosil-Dispersion aus Siliciumdioxid und Aluminiumdioxid zur Erhöhung der Härte und Glätte der Beschichtung, 13 bis 15 Gew.-% hartes Polyurethan in einem Wasser-Ethanol (80 % : 20 %)Gemisch als Bindemittel, 10 Gew.-% Wasser und 1 bis 2 Gew.-% Additive wie eine oberflächenaktive und vernetzende Substanz wie Methylethylsilan, Aminosilan (Dynasylan® 1151 der Fa. Degussa, Deutschland).

Die Leitfähigkeit der Laponite®⁻Beschichtung ist im Wesentlichen auf den Anteil der Laponite®⁻Dispersion und auf die Härte des Bindemittels zurückzuführen. Die Abwaschbarkeit hängt sehr stark mit den Eigenschaften des Bindemittels und der Menge des Haftvermittlers zusammen. Im Falle von Polypropylen ist der Einsatz von oberflächenaktiven Substanzen besonders wichtig. Aus Laponite® JS lassen sich glasklare glänzende dünne Schichten herstellen, die Dicke der Schichten ist von der Konzentration des Laponite® JS abhängig. Je höher der Anteil des Laponite® JS in der Lösung ist, desto dünner muss die Schicht sein, um optimale Verteilung und Vernetzung der Silikatkristalle zu gewährleisten. Die Beschichtungen auf Laponite-Basis lassen sich sehr gut mit Additiven für die Erhöhung der Kratzfestigkeit, des Glanzes, der Klarheit modifizieren.

### 2. Baytron® P

Baytron® P ist eine wässrige Dispersion des elektrisch leitfähigen Polymers PEDT/PSS, Polyethylendioxythiophen-Polystyrensulfonat der Fa. Bayer AG und als Handelsmarke registriert. Es handelt sich bei dem Polymer Baytron® P um einen intrinsischen Leiter, der hauptsächlich für die antistatische Beschichtung im Bereich Glas, Holz und Polymere, d. h. Kunststoffe, eingesetzt wird. Es lassen sich hochleitfähige, transparente Beschichtungen herstellen, die im Vergleich zu bekannten intrinsischen Leitern wie Polyanilin und Poly-pyrrol eine größere Beständigkeit gegen Hydrolyse, sowie höhere Licht- und Temperaturbeständigkeit aufweisen. Zweckmäßigerweise wird die Baytron® P-Dispersion in einem leichtflüchtigen Lösemittel wie Ethanol oder Isopropanol mit zumindest 11 Gew.ÿ% in der Lösung gelöst. Die übrigen Bestandteile der Rezeptur für die Baytron® P-Dispersion gleichen der Laponite® JS-Dispersion. Die in der Baytron® P-Dispersion enthaltenen Lösemittel werden mittels Wärme und/oder Infrarotstrahlung abgedampft.

Eine geeignete Rezeptur beinhaltet beispielsweise 40 bis 50 Gew.-% Baytron® P-Dispersion (Feststoffanteil etwa 3 bis 5 Gew.-%), 20-3 5 Gew.-% hartes und weiches Polyurethan und 11 bis 22 Gew.-% Isopropanol.

Die Beschichtungen sind transparent, farblos und glänzend.

### 3. Baytron® P + Laponite® JS

Die Kombination der beiden Produkte ermöglicht die Herstellung von wasserbasierenden Baytron® P-Formulierungen. Das einfache Vermischen in unterschiedlichen Gewichtsverhältnissen zeigt, dass zwischen den beiden Antistatika ein Synergismuseffekt entsteht, da Baytron® P in Verbindung mit Laponite® JS sich ohne Veränderung der Eigenfarbe mit Wasser verdünnen lässt, d. h. auf ein Lösungsmittel wie Isopropanol oder Ethanol verzichtet werden kann. Der Kombination wird noch ein Bindemittel und ein Haftvermittler hinzugefügt, um die Beschichtung abwaschbar, tiefziehfähig und haltbar zu machen.

### 4. Nanosol-Beschichtungen nach der Sol-Gel-Technologie

Nanosole sind reine oder modifizierte Silicumoxid- oder Metalloxidlösungen, welche als wasserklare Dispersion mit Teilchendurchmesser zwischen 2 und 5 nm bei Feststoffgehalten von 2 bis 30 Gew.-%, insbesondere von 10 bis 12 Gew.-%, durch Streichen, Sprühen, Tauchen, Walzen oder Beschichten auf Oberflächen von Polymeren, Glas, Metallen und dergleichen Materialien aufgetragen werden können. Sie sind mit Wasser und mit Wasser mischbaren organischen Lösungsmitteln wie Ethanol und Isopropanol verdünnbar. Durch Aufkonzentration in Folge der Verdunstung des oder der Lösemittel erfolgt der Übergang vom Sol zum Gel, d. h. die Ausbildung einer lösungsmittelhaltigen anorganischen Polymermatrix, wobei dieser Vorgang dem Abbinden herkömmlicher Lacksysteme vergleichbar ist. Die weitere Verdunstung bzw. Verdampfung der Lösemittel führt von der Lyogel- über Xerogel-Filmen zu oxidischen Filmen, was vergleichbar ist mit dem Aushärtevorgang herkömmlicher Lacksysteme.

Insbesondere für antistatisch ausgerüstete Oberflächen werden Oberflächenwiderstände von 10⁷ Ω/Fläche nach der Beschichtung und der Trocknung erhalten, die nach einem oder zwei Abwaschvorgängen auf 10⁸ bis 10⁹ Ω/Fläche und nach dem Tiefziehen im Falle von Folien auf 10¹⁰ Ω/Fläche ansteigen können. Die Beschichtungsdicken liegen bei Nassschichtdicken im Bereich von 2 bis 5 µm, während die Trockenschichtdicken 0,01 bis 0,5 µm betragen. Ein besonderer Vorteil der Nanosol-Beschichtungen besteht darin, dass sehr dünne Feststoffschichten erhalten werden können, wobei die Nassschichtdicken gering gehalten werden, da zu große Nassschichtdicken den Gelierprozess beim Trocknen negativ beeinflussen. Erfindungsgemäß werden durch ein spezielles Düsenauftragsystem bei der Nanosol-Beschichtung Nassschichtdicken von kleiner/gleich 1 µm erreicht, wie nachstehend noch näher beschrieben werden wird.

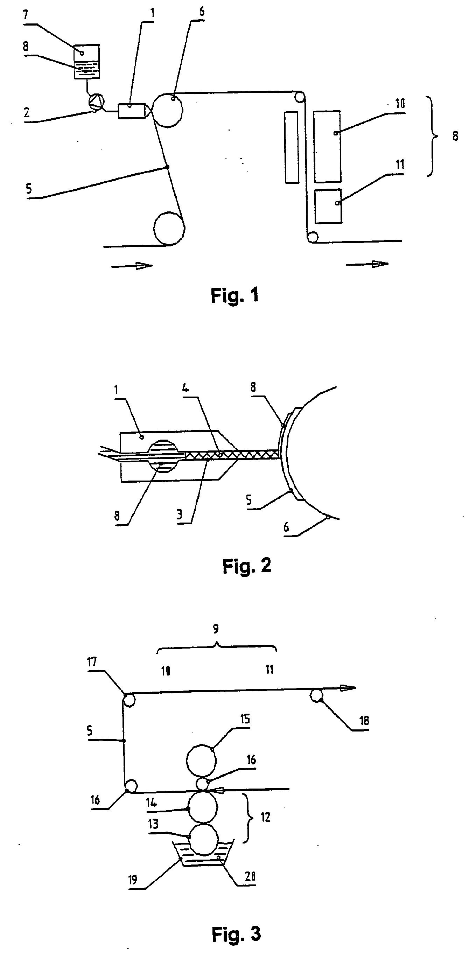

In Fig. 1 ist schematisch eine Vorrichtung zum Benetzen und Beschichten einer Folie, insbesondere einer Folienbahn 5 mit einer antistatischen Formulierung 8 dargestellt. Die Vorrichtung umfasst eine Extrusionsdüse 1, die einen dochtförmigen porösen Streifen 4 aufweist, der Kapillaren besitzt. Das Material dieses Streifens ist bevorzugt ein Filz, kann jedoch auch eine poröse Keramik oder metallisches oder glasförmiges Material sein, das entsprechende Kapillaren besitzt. Der Streifen 4, wie Fig. 2 zeigt, ist in einem Schlitz 3der Extrusionsdüse 1 angeordnet. Der Streifen 4 ragt aus dem Schlitz 3 heraus und liegt an der Folienbahn 5 an, die über eine Walze 6 geführt ist. Die Walze 6 und die Extrusionsdüse 1 liegen einander gegenüber, wobei die Extrusionsdüse horizontal ausgerichtet ist. Die Extrusionsdüse 1 ist über eine Dosierpumpe 2 mit einem Vorratsbehälter 7, der mit der antistatischen Formulierung 8 gefüllt ist, verbunden. Eine derartige Vorrichtung zum Beschichten und Benetzen von Warenbahnen ist beispielsweise in der DE 200 11 006 U1 beschrieben. In Laufrichtung der Folienbahn ist nach der Walze 6 eine Trocknungszone 9 vorhanden, in der Heißluft die antistatische Formulierung der nassbeschichteten Folienbahn trocknet. In der Trocknungszone 9 ist eine IR-Strahlungsquelle 10 vorhanden. Die Trocknungszone 9 kann entweder aus einem Trockner 11 und der IR-Strahlungsquelle 10 bestehen, aber auch aus dem Trockner allein oder der IR-Strahlungsquelle 10 allein.

Durch die Dosierpumpe 2 wird der dochtförmige Streifen 4 mit der antistatischen Formulierung unter Überdruck versorgt, sodass die antistatische Formulierung durch die nichtgezeigten Kapillaren des Streifens 4 auf die Oberfläche der Folienbahn 5 gedrückt wird. Es ist somit möglich, die Folienbahn 5 mit sehr dünnen Schichten von Nanosolen gleichmäßig zu benetzen bzw. zu beschichten. In der Trocknungszone 9 erfolgt durch die konventionelle Lufttrocknung gekoppelt mit der IR-Strahlung der Übergang vom Sol-Zustand zum Gel-Zustand der Nanosole.

Mit der Vorrichtung kann die antistatische Formulierung bzw. die Auftragslösung in einer Nassschichtdicke von 0,5 bis 8 um aufgetragen werden, und nach dem Durchlaufen der Trocknungszone 9 beträgt die Trockenschichtdicke 0,01 bis 4 µm, insbesondere 0,02 bis 2 um. Die Heißluft für die Trocknung hat eine Temperatur von 70 bis 90 °C, bevorzugt von 75 bis 80 °C. Die Folie bzw. die Oberfläche der Folienbahn 5 wird beispielsweise vor dem Aufbringen der antistatische Formulierung coronabehandelt. Die antistatische Formulierung 8 hat beispielsweise eine Zusammensetzung derart, dass der Gewichtsanteil des Bindemittels 10 bis 35 %, des dispergierten Bestandteils 63 bis 82 % und der übrigen Zusätze, wie Vernetzungsmittel, oberflächenaktive Substanzen, Haftvermittler, 0,5 bis 2 % beträgt.

Mit dieser Vorrichtung werden Nanosole und Dispersionen auf Laponite®-Basis aufgetragen. Die Vorrichtung erlaubt es, Folienbahnen von bis zu 2 m Breite, die mit hoher Geschwindigkeit von bis zu 70 m/min laufen, mit sehr geringer Schicktdicke gleichmäßig zu beschichten. Neben dem Aufbringen und dem Benetzen der Folienbahn 5 mittels der voranstehend beschriebenen Vorrichtung kann die Nanosol-Dispersion auch durch Streichen, Sprühen, Tauchen, Walzen auf die Oberfläche der Folienbahn bzw. eine Folie aufgebracht werden. Jedoch werden durch diese Verfahren nicht so dünne Schichten erzielt wie mittels der beschriebenen Vorrichtung.

Die Sol-Gel-Technik ermöglicht die einfache Herstellung transparenter, guthaftender Oxidfilme, z. B. Siliciumdioxid oder Metalloxid auf unterschiedlichen Substraten. Dazu dienen flüssige Nanosole als Beschichtungslösungen, die nach Trocknung dünne transparente Gelfilme bilden, wobei deren chemische oder physikalische Modifizierung eine nahezu unbegrenzte Vielfalt von Materialvariationen erlaubt.

Die antistatische Beschichtung einer Folienbahn 5 auf der Basis einer Dispersion geschieht beispielsweise mit Hilfe einer herkömmlichen Tauchwalzentechnologie, wie sie in Fig. 3 schematisch dargestellt ist. Die Folienbahn 5 läuft zwischen einem Auftragswerk 12 und einer Walzenkombination 15,16 hindurch. Die Walzenkombination aus der größeren Walze 15 und der kleineren Walze 16 drückt beispielsweise die kleinere Walze 16 mit einer Anpresskraft von 500 bis 700 N gegen die Folienbahn 5 bzw. gegen die Auftragswalze 14 an und stellt sicher, dass der Dispersionsfilm mit großer Gleichmäßigkeit von der Auftragswalze 14 auf die Folienbahn 5 übertragen wird. Mit steigender Geschwindigkeit der Folienbahn 5 muss die Anpresskraft erhöht werden.

Dispersionen aufBasis von Baytron® sind mit einer Filzdüsenvorrichtung schlecht aufzutragen, da auf Grund der Teilchengröße von Baytron die Filzdüse leicht und rasch verstopfen kann.

Das Auftragswerk 12 umfasst einen Behälter 19 mit einer Dispersion 20 auf Basis von Baytron® oder Baytron®-Laponite®, eine in die Dispersion 20 eintauchende Aufnahmewalze 13 und eine Auftragswalze 14, die mit der Aufnahmewalze 13 in Kontakt ist, um von dieser mit der Dispersion 20 benetzt zu werden. Die Auftragswalze 14 überträgt einen Dispersionsfilm auf die Unterseite der Folienbahn 5, die über zwei Umlenkwalzen 16,17 um 180° umgelenkt in die Trocknungszone 9 einläuft, wobei die beschichtete Unterseite nach oben weist. Die Trocknungszone 9 umfasst einen IR-Trockner 10 und einen Heißlufttrockner 11. Die Heißluft des Trockners 11 hat eine Temperatur von 75 bis 90 °C, insbesondere von 80 bis 85 °C. Nach dem Verlassen der Trocknungszone 9 läuft die Folienbahn 5 über eine Stützwalze 18 bzw. auf eine nicht gezeigte Aufwickelrolle auf.

Zusätzlich können die Nanosole durch zugesetzte Stoffe physikalisch modifiziertwerden, wobei die Additive (z.B. UV-Stabilisatoren, Biocide) homogen in die Matrix eingebettet und durch die Schichtzusammensetzung kontrolliert immobilisiert werden. Durch den Zusatz werden die Schichteigenschaften gravierend verändert und z.B. durch Zusatz mehrerer Additive (multi-)funktionelle Beschichtungen erzeugt.

## Patentansprüche

1. Folie mit antistatischer Beschichtung, die mindestens eine Schicht umfasst, die ein synthetisches anorganisches Schichtsilikat, ein elektrisch leitfähiges Polymer, ein Gemisch aus einem anorganischen Schichtsilikat und elektrisch leitfähigem Polymer, oder aus einem Nanosol hervorgegangenem reinem oder modifizierten Siliziumoxid oder Metalloxid auf der Basis von Zinn, Zink, Strontium, Wolfram, Eisen, Titan, Aluminium, Zirkonium enthält, mit einer Trockenschichtdicke von 0,01 µm bis 4 µm und einem Oberflächenwiderstand von 10⁴ bis 10⁸ Ω/Fläche der Schicht.

2. Folie nach Anspruch 1, **dadurch gekennzeichnet, dass** die Schicht Bindemittel, Haftvermittler, Vernetzungsmittel und/oder oberflächenaktive Substanzen enthält.

3. Folie nachAnspruch 2, **dadurch gekennzeichnet, dass** der Gewichtsanteil derBindemittel in der Schicht 10 bis 35 Gew.-% beträgt.

4. Folie nach Anspruch 1, **dadurch gekennzeichnet, dass** die antistatische Beschichtung auswaschfest ist und nach dem Waschen der Oberflächenwiderstand der Schicht im Bereich von 10⁴ bis 10⁹ Ω/Fläche liegt.

5. Folie nach Anspruch 4, **dadurch gekennzeichnet, dass** der Oberflächenwiderstand der Folie nach dem Tiefziehen der Folie 10⁴ bis 10¹⁰/Fläche beträgt.

6. Folie nach Anspruch 2, **dadurch gekennzeichnet, dass** die Bindemittel zumindest ein Polymer aus der Gruppe umfassen, enthaltend Polyurethane, Polyisocyanate, Polyacrylate und Polyvinylacetat.

7. Folie nach Anspruch 2, **dadurch gekennzeichnet, dass** die Haftvermittler aus der Gruppe auswählbar sind, die Organosilane, Fluorsilane, Aminosilane, Methylethylsilan und Chlorsilane enthält.

8. Folie nach Anspruch 2, **dadurch gekennzeichnet, dass** oberflächenaktive Substanzen aus der Gruppe der UV-Absorber und Biocide in der antistatischen Beschichtung enthalten sind.

9. Folie nach Anspruch 1, **dadurch gekennzeichnet, dass** das synthetische anorganische Schichtsilikat ein wasserhaltiges Na-Li-Mg-Fluorsilikat ist, das ein Polyphosphat-Peptisiermittel enthält und dass die Trockenschichtdicke des Schichtsilikats 0,15 µm bis 3 µm beträgt.

10. Folie nach Anspruch 1, **dadurch gekennzeichnet, dass** das elektrisch leitfähige Polymer ein Polyethylendioxythiophen-Polystyrensulfonat (PEDT/PSS) ist, das in einem leichtflüchtigen Lösemittel löslich ist.

11. Folie nach Anspruch 1, **dadurch gekennzeichnet, dass** das Gemisch aus einem anorganischen Fluorschichtsilikat und einem elektrisch leitfähigen Polymer ein Na-Li-Mg-Fluorschichtsilikat als Fluorschichtsilikat und PEDT/PSS als elektrisch leitfähiges Polymer enthält.

12. Folie nach Anspruch 11, **dadurch gekennzeichnet, dass** das Na-Li-Mg-Fluorschichtsilikat und PEDT/PSS im Verhältnis von 1:1 bis 1:2 miteinander gemischt sind.

13. Folie nach Anspruch 1, **dadurch gekennzeichnet, dass** die Nanosole reine oder mit Metallalkoxyverbindungen modifizierte Siliziumoxid- oder Metalloxidlösungen sind, die wasserklare Dispersionen mit Teilchendurchmesser von 2 bis 5 nm und einem Feststoffgehalt von 2 bis 30 Gew.-%, bezogen auf das jeweilige Dispersionsgewicht, bilden.

14. Folie nach Anspruch 13, **dadurch gekennzeichnet, dass** die Nanosole mit Wasser oder mit Wasser mischbaren organischen Lösemitteln verdünnt sind.

15. Folie nach Anspruch 1, **dadurch gekennzeichnet, dass** sie aus einem Polymer besteht, ausgewählt aus der Gruppe Polyester, Polypropylen, Polyethylen, Polyvinylchlorid, Polyamid, Polycarbonat, Polystyrol, Polymethacrylat, Celluloseacetobutyrat.

16. Verfahren zum Aufbringen einer antistatischen Formulierung auf eine Folie, insbesondere auf eine Folienbahn, **dadurch gekennzeichnet, dass** durch homogenes Dispergieren eines Schichtsilikats, eines elektrisch leitfähigen Polymers, eines Gemisches aus Schichtsilikat und elektrisch leitfähigem Polymer oder eines aus einem Nanosol hervorgegangenen Silizium- oder Metalloxids in reinem Wasser oder ein organisches Lösungsmittel enthaltendem Wasser, und Zusatz von mindestens einem Bindemittel und mindestens einem Haftvermittler eine Auftragslösung erhalten wird, die als Dispersion oder Nanosol durch Streichen, Sprühen, Tauchen, Walzen, Beschichten auf die Folienoberflächeund Aufkonzentrieren der dispergierten Bestandteile durch Verdunsten der Auftragslösung mittels IR-Strahlung und/oder Heißluft aufgebracht wird.

17. Verfahren nach Anspruch 16, **dadurch gekennzeichnet, dass** das Beschichten der Folie durch einen porösen Materialstreifen einer Extrusionsdüse hindurch mittels Überdruck ausgeführt wird.

18. Verfahren nach Anspruch 16, **dadurch gekennzeichnet, dass** der Auftragslösung, die ein Fluorschichtsilikat enthält, Vemetzungsmittel und/oder oberflächenaktive Substanzen zugesetzt werden.

19. Verfahren nach Anspruch 16, **dadurch gekennzeichnet, dass** die Auftragslösung in einer Nassschichtdicke von 0,5 bis 8 µm aufgetragen wird und dass die Trockenschichtdicke der Beschichtung 0,01 bis 4 µm beträgt.

20. Verfahren nach Anspruch 19, **dadurch gekennzeichnet, dass** die Trockenschichtdicke 0,02 bis 2 µm beträgt.

21. Verfahren nach Anspruch 16, **dadurch gekennzeichnet, dass** die Heißluft für die Trocknung auf eine Temperatur von 70 bis 90 °C, insbesondere 75 bis 80 °C erwärmt wird.

22. Verfahren nach Anspruch 16, **dadurch gekennzeichnet, dass** der Gewichtsanteil des Bindemittels 10 bis 35 %, des dispergierten Bestandteils 63 bis 82 % und der übrigen Zusätze wie Vernetzungsmittel, oberflächenaktive Substanzen, Haftvermittler 0,3 bis 2 %, jeweils bezogen auf das Gesamtgewicht der Dispersion oder des Nanosols, beträgt.

23. Verfahren nach Anspruch 16, **dadurch gekennzeichnet, dass** die Folienoberfläche vor dem Aufbringen der Beschichtung coronabehandelt wird.

24. Vorrichtung zumBenetzen und Beschichten einer Folie, insbesondere einer Folienbahn, mit einer antistatischen Formulierung, mit einer Extrusionsdüse, die einen porösen Streifen umfasst, durch dessen Kapillaren die antistatische Formulierung unter Überdruck hindurchtritt und auf die Folienoberfläche aufgetragen wird, **dadurch gekennzeichnet, dass** die Extrusionsdüse (1) einen Schlitz (3) aufweist, in dem der Streifen (4) angeordnet ist, der aus dem Schlitz (3) herausragt und an der Oberfläche der Folienbahn (5) anliegt, die über einen oberen Bereich einer Walze (6) geführt ist, dass die Extrusionsdüse (1) über eine Dosierpumpe (2) mit einem Vorratsbehälter (7) für die antistatische Formulierung (8) verbunden ist und dass in Laufrichtung der Folienbahn nach der Walze (6) eine Trocknungszone (9) vorhanden ist, in der Heißluft eines Trockners (11) die antistatische Formulierung (8) auf der nassbeschichteten Folienbahn (5) trocknet.

25. Vorrichtung nach Anspruch 24, **dadurch gekennzeichnet, dass** in der Trocknungszone ( 9) eine IR-Strahlungsquelle (10) vorhanden ist.

26. Vorrichtung nach Anspruch 24, **dadurch gekennzeichnet, dass** der Streifen (4) dochtförmig ist und sein Material aus Filz, poröser Keramik, Kapillaren aufweisenden metallischen oder glasförmigen Materialien besteht.
